# FASCICULE DE BREVET EUROPEEN

(11) **EP 3 190 007 B1**
(45) Date de publication et mention de la délivrance du brevet: **15.08.2018**
(21) Numéro de dépôt: 17150555.5
(22) Date de dépôt: 06.01.2017
(51) Int. Cl.: B60R 5/04

(54) **DISPOSITIF DE RECOUVREMENT D'UN COMPARTIMENT À BAGAGES DE VÉHICULE AUTOMOBILE**
ABDECKVORRICHTUNG EINES KOFFERRAUMABTEILS EINES KRAFTFAHRZEUGS
DEVICE FOR COVERING A LUGGAGE COMPARTMENT OF A MOTOR VEHICLE

(30) Priorité: 07.01.2016 FR 1650123
(43) Date de publication de la demande: 12.07.2017
(73) Titulaire: Cera APS, 51100 Reims (FR)
(72) Inventeur: BRILLON, Eric, 51390 Rosnay (FR); BONFILS, Xavier, 51100 Reims (FR)
(74) Mandataire: Sayettat, Julien Christian

(56) Documents cités:
- FR-A1- 3 019 119
- FR-A3- 2 946 594
- US-A1- 2015 375 682

## Description

L'invention concerne un dispositif de recouvrement d'un compartiment à bagages de véhicule automobile.

Il est connu de réaliser un dispositif de recouvrement d'un compartiment à bagages de véhicule automobile, ledit dispositif comprenant :
- un volet avant et un volet arrière pouvant être disposés en continuité horizontale l'un avec l'autre, de manière à présenter une configuration de recouvrement dudit compartiment,
- une couche de revêtement d'endroit souple recouvrant les faces supérieures respectives desdits volets, lesdits volets étant espacés l'un de l'autre de manière à dégager une première bande de ladite couche non disposée en recouvrement desdites faces, ladite bande formant tout ou partie d'une charnière transversale souple permettant un débattement en rotation vers le haut dudit volet arrière par rapport audit volet avant pour les mettre en configuration d'ouverture permettant un accès par le haut audit compartiment.

La mise à profit de la présence du revêtement d'endroit pour constituer la charnière permet d'éviter le montage d'une charnière spécifique, ce qui permet de réduire le coût du dispositif. FR3019119A décrit un dispositif de recouvrement d'un compartiment à bagages de véhicule automobile sélon le préambule de la revandication 1. Cependant, une telle charnière présente les inconvénients de :
- pouvoir être distendue lorsque les volets sont en configuration de recouvrement, ce qui est peu esthétique,
- permettre un débattement vertical d'un volet par rapport à l'autre au niveau de ladite charnière, ce qui est également peu esthétique puisque les volets ne sont plus dans le prolongement horizontal l'un de l'autre en configuration de recouvrement.

L'invention a pour but de pallier ces inconvénients.

A cet effet, l'invention propose un dispositif de recouvrement d'un compartiment à bagages de véhicule automobile, ledit dispositif comprenant :
- un volet avant et un volet arrière pouvant être disposés en continuité horizontale l'un avec l'autre, de manière à présenter une configuration de recouvrement dudit compartiment,
- une couche de revêtement d'endroit souple recouvrant les faces supérieures respectives desdits volets, lesdits volets étant espacés l'un de l'autre de manière à dégager une première bande de ladite couche non disposée en recouvrement desdites faces, ladite bande formant tout ou partie d'une charnière transversale souple permettant un débattement en rotation vers le haut dudit volet arrière par rapport audit volet avant pour les mettre en configuration d'ouverture permettant un accès par le haut audit compartiment,
les tranches desdits volets jouxtant ladite charnière étant pourvues de moyens d'emboitement réciproques, lesdits moyens étant agencés de manière à :
- coopérer entre eux quand lesdits volets sont en configuration de recouvrement, de manière à réaliser une mise en tension horizontale de ladite charnière et à empêcher tout débattement vertical entre lesdits volets,
- se désolidariser les uns des autres par mise desdits volets en configuration d'ouverture.

Dans cette description, les termes de positionnement dans l'espace (haut, supérieur, inférieur, longitudinal, transversal, latéral, avant, arrière, vertical, horizontal,...) sont pris en référence au dispositif mis en place dans le véhicule.

Avec l'agencement proposé, la charnière :
- présente un aspect tendu lorsque les volets sont en configuration de recouvrement,
- ne peut donner lieu à un débattement vertical d'un volet par rapport à l'autre,
ce qui résout les problèmes d'ordre esthétique rencontrés dans l'art antérieur.

D'autres particularités et avantages de l'invention apparaîtront dans la description qui suit, faite en référence aux figures jointes, dans lesquelles :

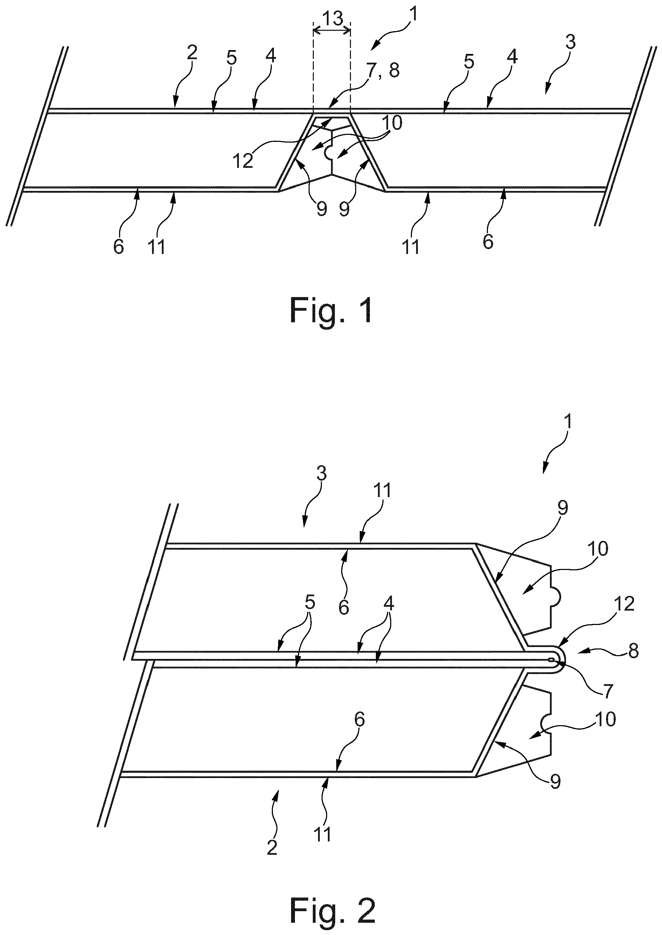

- la figure 1 est une vue schématique partielle en coupe longitudinale verticale d'un dispositif selon une réalisation, les volets étant en configuration de recouvrement,
- la figure 2 est analogue à la figure 1, les volets étant en configuration d'ouverture.

En référence aux figures, on décrit un dispositif 1 de recouvrement d'un compartiment à bagages de véhicule automobile, ledit dispositif comprenant :
- un volet avant 2 et un volet arrière 3 pouvant être disposés en continuité horizontale l'un avec l'autre, de manière à présenter une configuration de recouvrement dudit compartiment,
- une couche de revêtement d'endroit 4 souple recouvrant les faces supérieures respectives 5 desdits volets, lesdits volets étant espacés l'un de l'autre de manière à dégager une première bande 7 de ladite couche non disposée en recouvrement desdites faces, ladite bande formant tout ou partie d'une charnière 8 transversale souple permettant un débattement en rotation vers le haut dudit volet arrière par rapport audit volet avant pour les mettre en configuration d'ouverture permettant un accès par le haut audit compartiment,
les tranches 9 desdits volets jouxtant ladite charnière étant pourvues de moyens d'emboitement 10 réciproques, lesdits moyens étant agencés de manière à :
- coopérer entre eux quand lesdits volets sont en configuration de recouvrement, de manière à réaliser une mise en tension horizontale de ladite charnière et à empêcher tout débattement vertical entre lesdits volets,
- se désolidariser les uns des autres par mise desdits volets en configuration d'ouverture.

Selon la réalisation représentée, les moyens d'emboitement 10 sont sous forme de pièces montées, par exemple par des vis non représentées, sur les tranches 9 des volets 2,3.

Selon une réalisation, les moyens d'emboitement 10 sont sous forme de profilés.

Selon une réalisation non représentée, les volets 2,3 sont à base de matériau moulé, par exemple en mousse de polyuréthanne ou en matériau plastique injecté présentant par exemple une structure en nid d'abeille, les moyens d'emboitement 10 étant issus de moulage de manière à être intégrés auxdits volets.

Selon une réalisation, les moyens d'emboitement 10 sont disposés de façon discrète, par exemple en parties latérales des volets 2,3.

Selon une autre réalisation, les moyens d'emboitement 10 s'étendent sensiblement tout du long de la charnière 8.

Selon la réalisation représentée, les faces inférieures 6 des volets 2,3 sont recouvertes d'une couche de revêtement d'envers 11, par exemple à base de non-tissé, ladite couche définissant une deuxième bande 12 disposée entre lesdits volets, ladite deuxième bande étant associée à la première bande 7 de sorte que la charnière 8 soit formée par superposition desdites bandes.

Selon une réalisation, les volets 2,3 sont espacés l'un de l'autre d'une distance 13 comprise entre 3 et 6 mm, de manière à définir une charnière 8 de largeur analogue.

## Revendications

1. Dispositif (1) de recouvrement d'un compartiment à bagages de véhicule automobile, ledit dispositif comprenant :
• un volet avant (2) et un volet arrière (3) pouvant être disposés en continuité horizontale l'un avec l'autre, de manière à présenter une configuration de recouvrement dudit compartiment,
• une couche de revêtement d'endroit (4) souple recouvrant les faces supérieures (5) respectives desdits volets, lesdits volets étant espacés l'un de l'autre de manière à dégager une première bande (7) de ladite couche non disposée en recouvrement desdites faces, ladite bande formant tout ou partie d'une charnière (8) transversale souple permettant un débattement en rotation vers le haut dudit volet arrière par rapport audit volet avant pour les mettre en configuration d'ouverture permettant un accès par le haut audit compartiment,
ledit dispositif étant **caractérisé en ce que** les tranches (9) desdits volets jouxtant ladite charnière sont pourvues de moyens d'emboitement réciproques (10), lesdits moyens étant agencés de manière à :
• coopérer entre eux quand lesdits volets sont en configuration de recouvrement, de manière à réaliser une mise en tension horizontale de ladite charnière et à empêcher tout débattement vertical entre lesdits volets,
• se désolidariser les uns des autres par mise desdits volets en configuration d'ouverture.

2. Dispositif selon la revendication 1, **caractérisé en ce que** les moyens d'emboitement (10) sont sous forme de pièces montées sur les tranches (9) des volets (2,3).

3. Dispositif selon la revendication 2, **caractérisé en ce que** les moyens d'emboitement (10) sont sous forme de profilés.

4. Dispositif selon la revendication 1, **caractérisé en ce que** les volets (2,3) sont à base de matériau moulé, les moyens d'emboitement (10) étant issus de moulage de manière à être intégrés auxdits volets.

5. Dispositif selon l'une quelconque des revendications 1 à 4, **caractérisé en ce que** les moyens d'emboitement (10) sont disposés de façon discrète.

6. Dispositif selon l'une quelconque des revendications 1 à 4, **caractérisé en ce que** les moyens d'emboitement (10) s'étendent sensiblement tout du long de la charnière (8).

7. Dispositif selon l'une quelconque des revendications 1 à 6, **caractérisé en ce que** les faces inférieures (6) des volets (2,3) sont recouvertes d'une couche de revêtement d'envers (11), ladite couche définissant une deuxième bande (12) disposée entre lesdits volets, ladite deuxième bande étant associée à la première bande (7) de sorte que la charnière (8) soit formée par superposition desdites bandes.

8. Dispositif selon l'une quelconque des revendications 1 à 7, **caractérisé en ce que** les volets (2,3) sont espacés l'un de l'autre d'une distance (13) comprise entre 3 et 6 mm, de manière à définir une charnière (8) de largeur analogue.

## Patentansprüche

1. Vorrichtung (1) zum Abdecken eines Kraftfahrzeug-Kofferraums, wobei die Vorrichtung umfasst:
- eine vordere Klappe (2) und eine hintere Klappe (3), die in horizontaler Durchgängigkeit zueinander angeordnet werden können, sodass sie eine Konfiguration zur Abdeckung des Raums aufweisen,
- eine biegsame Vorderseiten-Überzugsschicht (4), die die jeweiligen oberen Flächen (5) der Klappen bedeckt, wobei die Klappen so voneinander beabstandet sind, dass sie einen ersten Streifen (7) der Schicht freilegen, der nicht in Abdeckung der Flächen angeordnet ist, wobei der Streifen das gesamte oder einen Teil eines biegsamen Querscharniers (8) bildet, das ein drehendes Auslenken der hinteren Klappe in Bezug auf die vordere Klappe nach oben ermöglicht, um sie in Öffnungskonfiguration zu bringen, die einen Zugang zum Raum von oben her ermöglicht,
wobei die Vorrichtung **dadurch gekennzeichnet ist, dass** die Abschnitte (9) der Klappen, die an das Scharnier angrenzen, mit gegenseitigen Steckmitteln (10) versehen sind, wobei die Mittel so eingerichtet sind, dass sie:
- miteinander zusammenwirken, wenn sich die Klappen in Abdeckungskonfiguration befinden, sodass ein horizontales Spannen des Scharniers ausgeführt und jedes vertikale Auslenken zwischen den Klappen verhindert wird,
- sich durch Bringen der Klappen in Öffnungskonfiguration voneinander lösen.

2. Vorrichtung nach Anspruch 1, **dadurch gekennzeichnet, dass** die Steckmittel (10) in der Form von Teilen vorliegen, die an den Abschnitten (9) der Klappen (2,3) montiert sind.

3. Vorrichtung nach Anspruch 2, **dadurch gekennzeichnet, dass** die Steckmittel (10) in der Form von Profilen vorliegen.

4. Vorrichtung nach Anspruch 1, **dadurch gekennzeichnet, dass** die Klappen (2, 3) auf Basis von gegossenem Material sind, wobei die Steckmittel (10) aus dem Guss hervorgegangen sind, sodass sie in den Klappen integriert sind.

5. Vorrichtung nach einem der Ansprüche 1 bis 4, **dadurch gekennzeichnet, dass** die Steckmittel (10) in diskreter Weise angeordnet sind.

6. Vorrichtung nach einem der Ansprüche 1 bis 4, **dadurch gekennzeichnet, dass** sich die Steckmittel (10) im Wesentlichen entlang des gesamten Scharniers (8) erstrecken.

7. Vorrichtung nach einem der Ansprüche 1 bis 6, **dadurch gekennzeichnet, dass** die unteren Flächen (6) der Klappen (2, 3) mit einer Rückseiten-Überzugsschicht (11) bedeckt sind, wobei die Schicht einen zweiten Streifen (12) definiert, der zwischen den Klappen angeordnet ist, wobei der zweite Streifen derart mit dem ersten Streifen (7) verbunden ist, dass das Scharnier (8) durch Überdeckung der Streifen gebildet wird.

8. Vorrichtung nach einem der Ansprüche 1 bis 7, **dadurch gekennzeichnet, dass** die Klappen (2, 3) um einen Abstand (13) im Bereich zwischen 3 und 6 mm voneinander beabstandet sind, sodass sie ein Scharnier (8) von gleicher Breite zu definieren.

## Claims

1. Device (1) for covering a luggage compartment of a motor vehicle, said device comprising:
- a front flap (2) and a rear flap (3) able to be arranged in horizontal continuity with one another, in such a way as to have a covering configuration of said compartment,
- a covering layer of a flexible location (4) covering the respective upper faces (5) of said flaps, said flaps being spaced apart from one another in such a way as to release a first strip (7) of said layer that is not arranged as covering said faces, said strip forming all or a portion of a flexible transversal hinge (8) allowing for a clearance in rotation towards the top of said rear flap in relation to said front flap in order to set them in the open configuration allowing for access from the top to said compartment,
said device being **characterised in that** the edges (9) of said flaps adjoining said hinge are provided with reciprocal nesting means (10), said means being arranged in such a way as to:
- cooperate with one another when said flaps are in covering configuration, in such a way as to produce a horizontal tensioning of said hinge and to prevent any vertical clearance between said flaps,
- detach from one another by setting said flaps into the open configuration.

2. Device according to claim 1, **characterised in that** the means of nesting (10) are in the form of parts mounted on the edges (9) of the flaps (2, 3).

3. Device according to claim 2, **characterised in that** the means of nesting (10) are in the form of profiles.

4. Device according to claim 1, **characterised in that** the flaps (2, 3) have a moulded material base, with the means of nesting (10) coming from moulding in such a way as to be integrated into said flaps.

5. Device according to any of claims 1 to 4, **characterised in that** the means of nesting (10) are arranged in a discrete manner.

6. Device according to any of claims 1 to 4, **characterised in that** the means of nesting (10) extend substantially all along the hinge (8).

7. Device according to any of claims 1 to 6, **characterised in that** the lower faces (6) of the flaps (2, 3) are covered with a layer of back coating (11), said layer defining a second strip (12) arranged between said flaps, said second strip being associated with the first strip (7) in such a way that the hinge (8) is formed by superposition of said strips.

8. Device according to any of claims 1 to 7, **characterised in that** the flaps (2, 3) are spaced apart from one another by a distance (13) between 3 and 6 mm, in such a way as to define a hinge (8) with a similar width.
